# EUROPÄISCHE PATENTSCHRIFT

(11) **EP 2 174 021 B1**
(45) Veröffentlichungstag und Bekanntmachung des Hinweises auf die Patenterteilung: **13.06.2012**
(21) Anmeldenummer: 08773288.9
(22) Anmeldetag: 03.07.2008
(51) Int. Cl.: F16B 13/14

(54) **DÜBEL FÜR SELBSTTÄTIGEN DECKPLATTENHINTERGRIFF UND DESSEN SETZ- UND KLEBEVERFAHREN**
DOWEL FOR AUTOMATICALLY ENGAGING BEHIND COVER PANELS, AND METHOD FOR PLACING AND ADHESIVELY BONDING IT
CHEVILLE DESTINÉE À S'ENGAGER PAR L'ARRIÈRE AVEC DES PANNEAUX DE RECOUVREMENT ET SON PROCÉDÉ DE POSE OU DE COLLAGE

(30) Priorität: 04.07.2007 DE 102007031176
(43) Veröffentlichungstag der Anmeldung: 14.04.2010
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2008/001094
(87) Internationale Veröffentlichungsnummer: WO 2009/003459

(56) Entgegenhaltungen:
- EP-A- 1 277 971
- AT-B- 364 113
- CH-A5- 561 862
- CH-A5- 604 024
- US-A- 2 092 341

## Beschreibung

Die Erfindung betrifft einen Dübel zur Befestigung an - in Stützkernbauweise gefertigten - flächigen Bauteilen mit einer ersten und einer zweiten Deckplatte und mindestens einer Stützkernzwischenlage, wobei der Dübel mindestens einen - zumindest ein Befestigungsmittel aufnehmenden - Spreizkörper und mindestens einen im Spreizkörper geführten Keilkörper umfasst.

Die flächigen Bauteile in Stützkernbauweise werden oft auch als Sandwichplatten, Wabenplatten oder Leichtbauplatten bezeichnet. Alle Plattentypen haben im Möbelbau in der Regel Decklagen aus Dünnspanplatten, mittel- oder hochdichten Faserplatten, Sperrholz- oder Hartfaserplatten. Die Sandwichplatten haben dabei als Mittelschicht bzw. Stützkern z.B. PolyurethanSchaum oder Polystyrol. Bei den Wabenplatten werden als Zwischenlagen oft Wellstegeinlagen oder sog. expandierte Honigwaben eingesetzt. Die meisten Leichtbauplatten haben eine Rohdichte, die unter 500 kg/m³ liegt. Werden für die Zwischenlage keine brandhemmenden Aluminiumschäume oder Blähglas verwendet, liegt die Rohdichte unter 350 kg/m³. Zum Vergleich beträgt die Rohdichte einer unbeschichteten Spanplatte ca. 600 bis 750 kg/m³_{.}

Sollen an Leichtbauplatten Beschläge z.B. durch Anschrauben befestigt werden, hat man das Problem, dass die Befestigungsmittel in der Regel nur an den relativ dünnen Decklagen bzw. Deckplatten Halt finden. Eine typische Lösung hierfür sind Spreizdübel, wie sie in der Druckschrift DE 20 2004 000 474 U1 offenbart sind. Die Spreizdübel haben jedoch den Nachteil, dass sie vorn und hinten die obere Platte großflächig umgreifen. Der hintere Umgriff verdrängt zudem weiträumig das Stützkernmaterial in der Umgebung der Bohrung, wodurch sich bei einer auf den Dübel wirkenden Zuglast die Deckplatte schneller vom Kernmaterial löst und abhebt.

Ein anderer Dübel, der diesen Nachteil vermeidet, ist aus dem Internetkatalog (September 2006) des Unternehmens Fischer Befestigungssysteme GmbH bekannt. Er wird dort unter der Bezeichnung SLM-N geführt. Der Dübel hat einen rohrförmigen Spreizkörper, in dessen Bohrung ein zumindest bereichsweise kegelstumpfförmiger Keilkörper am hinteren, geschlitzten Spreizkörperende eingesteckt ist. Der Keilkörper hat eine zentrale Bohrung mit Innengewinde. Wird der Keilkörper zum Beispiel durch das Anziehen einer im Gewinde des Keilkörpers sitzenden Halteschraube in den Spreizkörper hineinbewegt, spreizt sich dieser unter Festklemmen im unteren Bereich der Bohrung. Allerdings würde dieser Dübel nur in einem sehr formsteifen Kernmaterial fest sitzen.

Ferner ist aus der DE 10 2006 049 952 ein Dübel bekannt, in dessen zentraler Bohrung eine mit Klebstoff befüllte Blase angeordnet ist. Die Blase wird beim Einsetzen des Keilkörpers zerdrückt, womit durch die Klebstofffreigabe die untere Deckplatte mit dem Dübel verklebt wird.

Aus der CH 604 024 ist u.a. ein Dübel bekannt, der eine zentrale Bohrung aufweist, die mit klebstoffbeladenen Mikroperlen befüllt ist. Das hintere Ende der zentralen Bohrung ist verschlossen. Zudem ist die zentrale Bohrung mit der Umgebung über eine Vielzahl von radialen Querbohrungen verbunden.

Der vorliegenden Erfindung liegt das Problem zugrunde, einen Dübel für Leichtbauplatten zu entwickeln, der bei einfacher Montage fest, sicher und dauerhaft in der Leichtbauplatte hält. Eine Montage an oder in festen Platteneinlagen oder an den jeweiligen Plattenriegeln ist hierbei nicht vorgesehen.

Das Problem wird mit den Merkmalen der Ansprüche 1 und 2 gelöst. Der Dübel ist in die Ausnehmung der Leichtbauplatte setzbar. Der Dübel weist mindestens ein dübelseitiges Hintergriffselement auf, mit dem die erste Deckplatte zumindest bereichsweise hintergreifbar ist. Der Dübel hat mindestens zwei dübelseitige Klemmelemente, die radial in der Sacklochausnehmung verklemmbar sind. Der Dübel weist mindestens einen Hohlraum - zur Aufnahme einer größeren Anzahl von Klebstoff oder Klebstoffkomponenten aufnehmenden Ballons - mit mindestens einer Öffnung auf. Der oder die Hohlräume sind bei der Dübelmontage unter Eigenverformung und Zerdrücken der Ballons temporär veränderbar. Die maximale Weite der einzelnen Öffnung ist kleiner als der Durchmesser des kleinsten Ballons.

Der Anspruch 2 beschreibt einen Dübel, der nicht in die Sacklochausnehmung hineinragt.

In Anspruch 13 wird beschrieben, wie ein derartiger Dübel in eine entsprechende Bohrung der Leichtbauplatte eingesetzt und sowohl mechanisch als auch stoffschlüssig verankert wird.

Mit der vorliegenden Erfindung wird ein Dübel für Leichtbauplatten geschaffen, der bei hoher Auszugskraft sowohl manuell als auch maschinell schnell und sicher gesetzt werden kann. Hierbei ist der Dübel so konstruiert, dass sein Fixieren in der Leichtbauplatte in zwei Stufen erfolgt. In einer ersten Stufe wird er rein mechanisch in der Leichtbauplatte unverrückbar arretiert. In einer zweiten Stufe wird er mittels eines mitgeführten Klebstoffes - mit oder ohne Klebstoffexpansion - am Arretierungsort an beiden Enden so verklebt, dass die obere und die untere Deckplatte über den Dübel zusätzlich formsteif verklebt werden.

Der Klebstoff wird in Hohlräumen des Dübels in kleine Ballons verpackt, die dauerhaft z.B. als nicht klebendes Perlenschüttgut in dem Dübel gelagert werden. Die aus einer z.B. spröden Hülle bestehenden Ballons werden im Weiteren als Mikro- oder Makrokapseln bezeichnet. Die Mikrokapseln haben einen Außendurchmesser, der kleiner als ein Millimeter ist. Die Makrokapseln können einen Durchmesser von drei Millimetern erreichen. In den Kapseln kann beispielsweise ein Klebstoff integriert sein, der bei Kontakt mit Luft und/oder mit Luftfeuchtigkeit abbindet. In den Ausführungsbeispielen werden zwei Sorten von Kapseln verwendet. Die eine Gruppe von Kapseln enthält eine erste Klebstoffkomponente, z.B. einen Härter, und die andere Gruppe eine zweite Klebstoffkomponente, z.B. einen Binder. Die Kapseln liegen im Dübel schon im richtigen Mischungsverhältnis durchmengt vor. Je nach Mischungsverhältnis kann man nach dem Zerdrücken der Kapseln z.B. einen expandierenden zähhart aushärtenden 2-K Polyurethan-Klebstoff erzeugen.

Anstelle von zwei verschiedenen Mikrokapselgruppen können auch Mehrwandkapseln vorgesehen werden. Die einzelne Mehrwandkapsel beinhaltet beide Klebstoffkomponenten getrennt voneinander.

Weitere Einzelheiten der Erfindung ergeben sich aus den Unteransprüchen und den nachfolgenden Beschreibungen schematisch dargestellter Ausführungsformen.
- Figur 1:: Dimetrische Darstellung eines Dübels mit angeformtem Hintergriffsabschnitt von schräg unten;
- Figur 2:: wie Figur 7, jedoch von schräg oben;
- Figur 3:: Schnitt des mit Mikroperlen befüllten Dübels nach den Figuren 1 und 2;
- Figur 4:: teilweise gesetzter Dübel mit Dübelsetzeinrichtung;
- Figur 5:: wie Figur 4, jedoch nach dem vollständigen Einschieben des Dübels;
- Figur 6:: wie Figur 5, jedoch mit geringfügig zurückgezogenem Dübel;
- Figur 7:: wie Figur 6, jedoch mit verschobenem Keilkörper;
- Figur 8:: wie Figur 7, jedoch verklebt und mit befestigtem Beschlag;
- Figur 9:: Querschnitt des Dübels nach Figur ? - unterhalb des Sitzabschnitts - mit halbseitig verschwenkten Hintergriffselementen, vergrößert dargestellt;
- Figur 10:: wie Figur 9, jedoch mit Folienbrücken in den Längsschlitzen, vergrößert dargestellt;
- Figur 11:: wie Figur 9, jedoch mit sich übereinander schiebenden Hintergriffselementen, vergrößert dargestellt;
- Figur 12:: Längsschnitt eines Dübels, der vor der zweiten Deckplatte endet;
- Figur 13:: Querschnitt durch Spreizkörper des Dübels nach Figur 12.

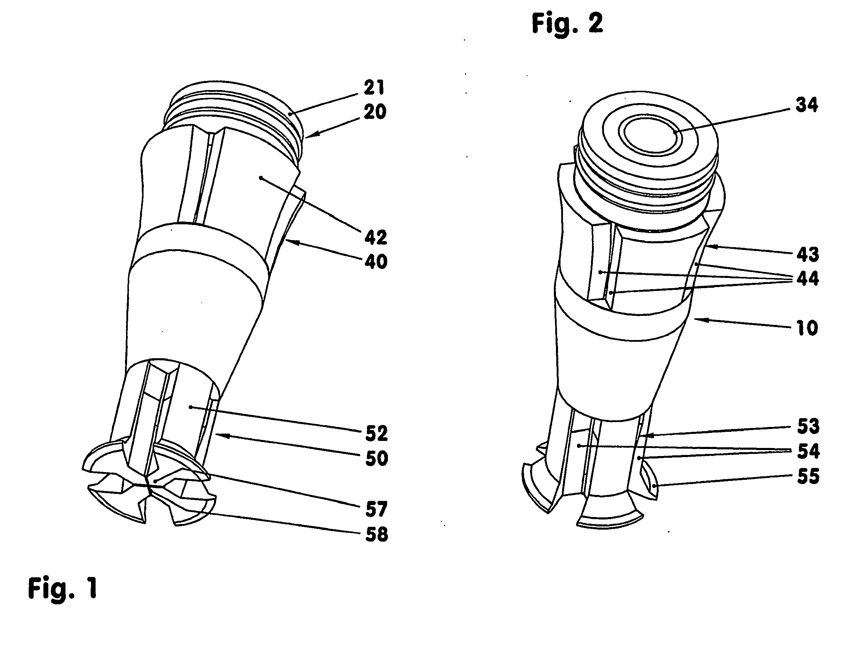

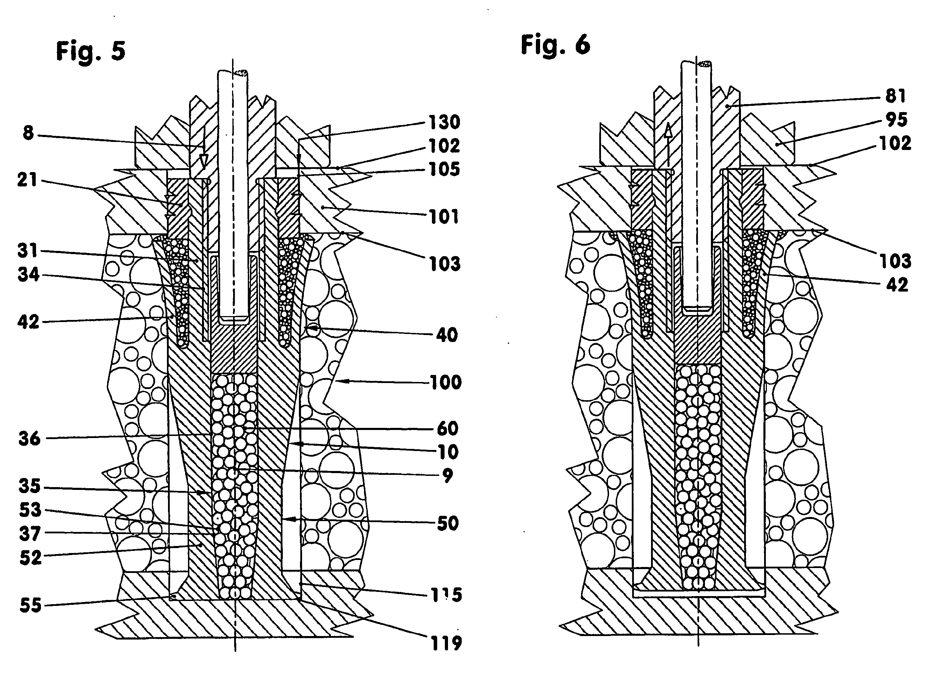

Die Figuren 1 und 2 zeigen einen unverformten Dübel. Der Dübel hat einen Spreizkörper (10), der aus drei größeren Bereichen (20, 40, 50) besteht. Ein oberer Bereich ist der Sitzabschnitt (20) mit der Zylinderzone (21). Der Sitzabschnitt (20) hat eine zentrale Gewindebohrung (34), die der Aufnahme von Befestigungselementen, wie z.B. Schrauben (1), dient, vgl. Figur 6. Ein mittlerer Bereich ist ein Hintergriffsabschnitt (40), der hier z.B. vier Hintergriffselemente (42) umfasst. Ein unterer Bereich (50) ist ein Spreizabschnitt, der z.B. ebenfalls vier Klemmelemente (52) aufweist.

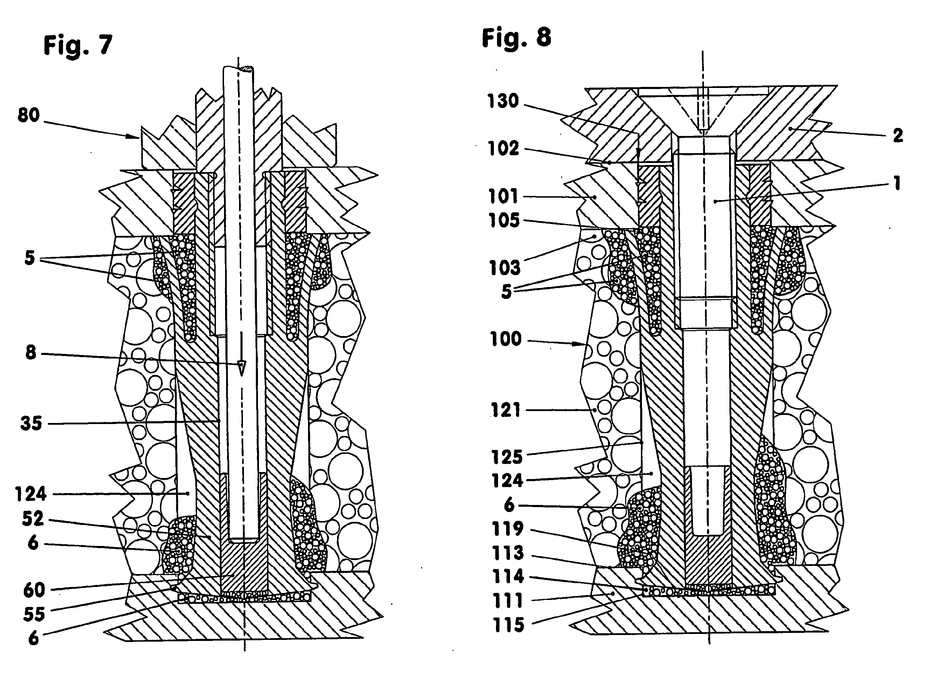

Der Dübel dient z.B. der Beschlagsbefestigung in Leichtbauplatten (100) ohne Riegel und festen Einlagen, vgl. Figur 8. Die gezeigte Leichtbauplatte (100) umfasst zwei Deckplatten (101) und (111) und einen dazwischen liegenden Stützkern (121). Jede Deckplatte (101, 111) besteht im Ausführungsbeispiel aus einer Dünnspanplatte. Der Stützkern (121) ist hier z.B. ein PU-Schaumkern. Die Deckplatten (101, 111) sind mit ihren innenliegenden Oberflächen (103, 113) mit dem plattenförmigen Stützkern (121) verklebt. Die dargestellte Leichtbauplatte hat z.B. eine Wandstärke von 20 bis 40 Millimetern. Jede Deckplatte ist hier 2 bis 8 Millimeter dick. Statt des Schaumkerns kann sie u.a. auch einen Wabenkern haben. In der Leichtbauplatte befindet sich eine Bohrung (130), die sich aus den Abschnitten (105), (125) und (115) zusammensetzt. Letzterer Abschnitt (115) ist eine Sacklochbohrung. Ihre Tiefe beträgt hier 25 bis 75% der Materialstärke der unteren Deckplatte (111). Ggf. kann anstelle der Sacklochbohrung (115) eine Durchgangsbohrung verwendet werden. Für einen Dübeltyp, wie er in den Figuren 1 und 2 dargestellt ist, kann u.a. die Sacklochbohrung (115) einen kleineren Durchmesser haben als die Bohrungen (105) und (125).

Die Leichtbauplatte (100) kann auch gewölbt, z.B. zylindrisch oder sphärisch, ausgeführt sein, sofern die Materialstärke des Stützkerns (121) zumindest annähernd konstant ist.

Um den Dübel montieren zu können wird die erste Deckplatte (101) und der Stützkörper (121) durchbohrt. Die zweite Deckplatte (111) wird entsprechend tief aufgebohrt. Die Deckplatte (111) wird hier also nicht durchbohrt. Als Bohrwerkzeug wird beispielsweise ein Spiralbohrer benutzt, der einen Spitzenwinkel von 180 Winkelgraden aufweist. Ggf. kann auch ein Stirnsenker verwendet werden. Je nach Dübelbauart kann die Bohrung (130) auch mit einem Stufensenker gebohrt werden, z.B. wenn die Sacklochbohrung (115) der unteren Deckplatte (111) einen kleineren Durchmesser haben soll als die restliche Bohrung (105, 125). Die entstandene Ausnehmung, bzw. Bohrung (130) wird beispielsweise mit Pressluft freigeblasen oder leergesaugt.

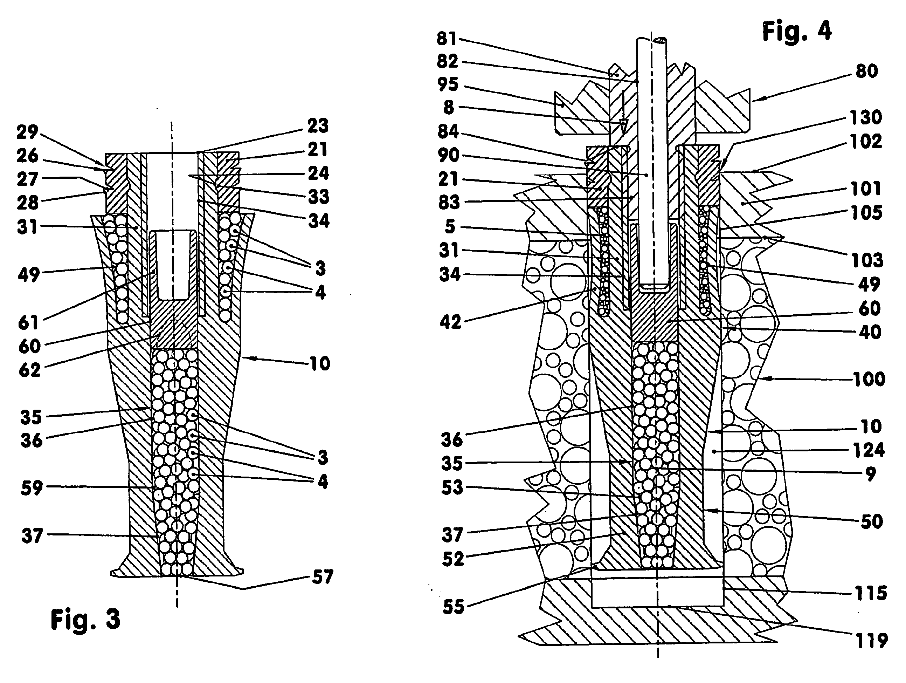

In Figur 3 ist ein unverformter Dübel dargestellt, in dessen Hohlräumen (49) und (59) eine Vielzahl von Mikrokapseln (3, 4) eingefüllt sind. Beide Hohlräume (49, 59) sind im Prinzip Käfige, die die Mikrokapseln (3, 4) verliersicher umgeben, ohne sie hermetisch einzuschließen. Die gezeigten Mikrokapseln haben hier einen Durchmesser von 0,6 bis 0,8 Millimetern. Der obere Hohlraum (49) wird gebildet durch einen Rohrabschnitt (31), die diesen umgebenden Hintergriffselemente (42) und einer auf dem Rohrabschnitt (31) z.B. form- und/oder kraftschlüssig sitzenden, z.B. ringförmigen Zylinderzone (21). Die Hintergriffselemente (42) formen zumindest annähernd eine kegelstumpfmantelförmige Umhüllung des Hohlraumes (49). Die zwischen den einzelnen Hintergriffselementen (42) liegenden Längsschlitze (43) haben an ihren weitesten Stellen - also oben - einen Abstand, der z.B. 2 bis 40% kleiner ist als der Durchmesser der kleinsten Mikrokapsel (3, 4). Der Hohlraum (49) wird nach oben hin durch die untere Stirnfläche der Zylinderzone (21) abgeschlossen. Zwischen der unteren Stirnfläche der Zylinderzone (21) und den Oberkanten der Hintergriffselemente (42) befindet sich ein Spalt, dessen Spaltbreite ebenfalls z.B. 2 bis 40% kleiner ist als der Durchmesser der kleinsten Mikrokapsel (3, 4).

Die montierte Zylinderzone (21) schließt oben z.B. bündig mit dem Rohrabschnitt (31) ab. Zwischen der Stirnfläche (23) und der Oberkante der Hintergriffselemente (42) befindet sich in der Außenwandung des Rohrabschnitts (31) eine umlaufende Nut (33). In diese Nut (33) greift - zur axialen Fixierung der Zylinderzone (21) am Rohrabschnitt (31) - ein z.B. passgenauer Umlaufsteg (24) der Zylinderzone (21) ein.

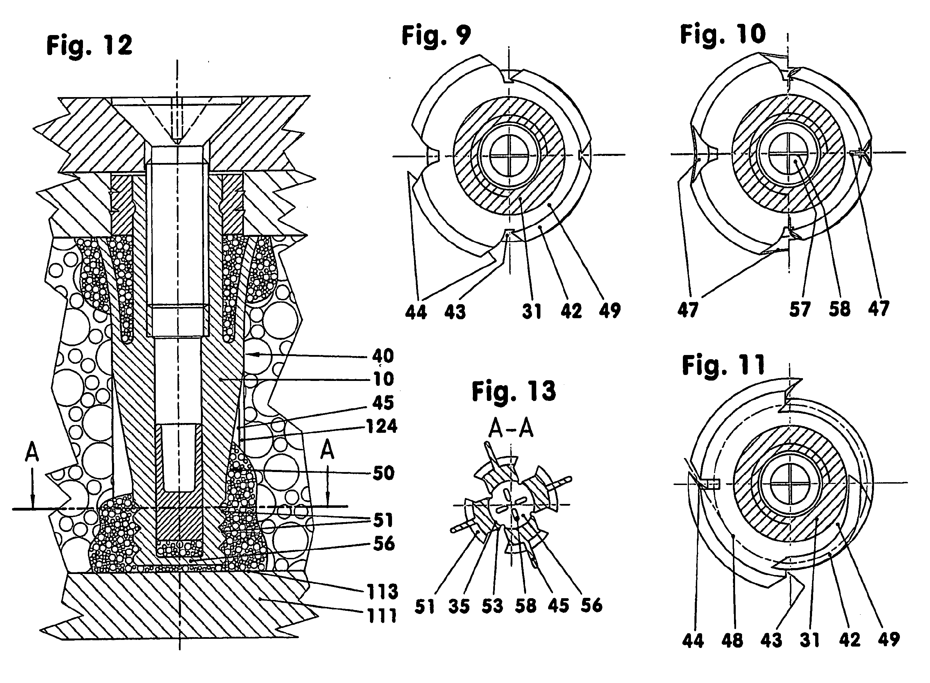

Die Zylinderzone (21) hat hier zwei ebenfalls umlaufende Widerhakenstege (26). Die geschlossenen, ringförmigen Widerhakenstege (26) haben einen dreieckigen Einzelquerschnitt, vgl. Figur 9 und 10, mit einer Stützflanke (27) und einer Rutschflanke (28). Sie stehen z.B. 0,15 Millimeter über die dortige zylindrische Außenkontur über. Oberhalb eines jeden Widerhakensteges (26) befindet sich ein umlaufender Ringkanal (29) mit einem ebenfalls dreieckigen Einzelquerschnitt. Der einzelne Ringkanal (29) ist jeweils so gestaltet, dass sich die Fläche der Stützflanke (27) vergrößert. Die Kontur von Ringkanal (29) und Widerhakensteg (26) ist z-förmig gestaltet. Durch diese spezielle Kontur sind die Widerhakenstege (26) in Eindrückrichtung nachgiebiger.

Die Widerhakenstege (26) bewirken u.a. ein verdrehsicherndes Verklemmen des Spreizkörpers (10) in der Bohrung (105). Zusätzlich dichten sie die Montagefuge zwischen dem Spreizkörper (10) und der Leichtbauplatte (100) ab, so dass dort weder Schmutz noch Feuchtigkeit eindringen kann. Auch kann auf diese Weise kein Stützkernmaterial und kein Klebstoff in die Umgebung oder an die Oberfläche (102) gelangen.

Alternativ hierzu kann der Sitzabschnitt (20) auch eine Vielzahl von Längsstegen aufweisen. Alle Längsstege verlaufen parallel zur Mittellinie (9) des Dübels. Auch hier hat jeder Steg einen z.B. dreieckigen Querschnitt, wobei seine Flanken z.B. einen 90°-Winkel einschließen. Ggf. nimmt der Querschnitt der Stege von oben nach unten zu. Dies erhöht die Dichtigkeit der Montagefuge.

Die Hintergriffselemente (42) nach den Figuren 1 und 2 haben Seitenflächen (44), die pro Hintergriffselement (42) zueinander zumindest parallel verlaufen. Dadurch ist die Längsschlitzweite an der Innenseite der Hintergriffselemente (42) am kleinsten, vgl. Figur 9.

Die Figur 9 zeigt einen Querschnitt des Dübels nach den Figuren 1 und 2, der direkt unterhalb des Sitzabschnitts (20) geschnitten ist. Der Hohlraum (49) ist hier nicht befüllt. Die linke Seite des Dübels ist unverformt, während die rechte Dübelseite mit der aus Figur 4 bekannten Verformung dargestellt ist.

Nach Figur 10 befindet sich zwischen je zwei einander gegenüberliegenden Seitenflächen (44) eine Folienbrücke (47). Ggf. ist jede Folienbrücke (47) auch am Grund des entsprechenden Längsschlitzes (43) angeformt. Die Folienbrücken (47) verhindern beim Einbauen des Dübels ein zu schnelles Abfließen der in den Mikrokapseln (3, 4) gelagerten Klebstoffe oder Klebstoffkomponenten in den Hohlraum (124) der Leichtbauplatte (100).

Eine weitere Form der Hintergriffselemente (42) ist in Figur 11 gezeigt. Dort sind die Längsschlitze (43) beim unverformten Hintergriffsabschnitt (40) über ihre gesamte Länge gleichschmal. Zudem verlaufen die Längsschlitze (43) nicht radial, sondern tangential zu einem Hilfskreis bzw. Hilfszylinder (48). Der Durchmesser des Hilfszylinders (48) ist größer als der Außendurchmesser des Rohrabschnitts (31). Ggf. wird anstelle des Hilfszylinders (48) ein Hilfskegelstumpf verwendet. Beim Verformen der Hintergriffselemente (42), vgl. Figur 4, gleiten die benachbarten Hintergriffselemente (42) bereichsweise schuppenartig übereinander, vgl. rechte Seite der Figur 11.

Die Figur 4 zeigt den Dübel beim Einsetzen in die Bohrung (130) einer Leichtbauplatte (100) mit Hilfe einer Dübelsetzeinrichtung (80). Die Hintergriffselemente (42) passieren unter Eigenverformung und Zerdrücken der Mikrokapseln (3, 4) gerade die obere Deckplatte (101).

Die Dübelsetzeinrichtung (80) umfasst hier zumindest ein Greifrohr (81), einen Spreizstempel (90) und einen Niederhalter (95).

Das Greifrohr (81) ist ein z.B. rohrförmiges Bauteil, das eine Durchgangsbohrung (82) aufweist und an seinem vorderen Ende einen Gewindeabschnitt (83) trägt. Zur Aufnahme des Dübels wird der Gewindeabschnitt (83) in die dübelseitige Gewindebohrung (34) eingeschraubt. Bei Dübeln, deren zentrale Bohrung kein Gewinde aufweist, erfasst das Greifrohr (81) den Dübel in der zentralen Ausnehmung z.B. mittels kraftschlüssiger Greifelemente.

Alternativ kann die Bohrung (34) zur Aufnahme von nichtmetrischen Schrauben, z.B. Spanplattenschrauben oder Holzschrauben, einen rechteckigen, ovalen, polygonförmigen oder sternförmigen Querschnitt haben. Ggf. verjüngt sich der Ausnehmungsquerschnitt vom Bohrungsanfang zum Bohrungsende hin. Für alle diese Formen gibt es die passenden Greifelemente.

In der Bohrung des Greifrohres (81) ist der Spreizstempel (90) längsverschiebbar geführt gelagert. Das Greifrohr (81) selbst sitzt längsgeführt in dem Niederhalter (95).

Das Greifrohr (81) liegt mit seinem Wellenbund (84) definiert an der oberen Stirnfläche (23) des Dübels an. Der Niederhalter (95) liegt auf der Oberfläche (103) der Leichtbauplatte (100) auf.

Der in Figur 4 gezeigte Dübel steckt mit seiner Zylinderzone (21) noch nicht ganz in der Bohrung (105). An diese Zylinderzone (21) schließt sich ein Rohrabschnitt (31) an. Der Rohrabschnitt (31) endet im Grund des Hohlraumes (49). Er ist umgeben von dem Hintergriffsabschnitt (40).

Letzterer besteht hier aus vier angeformten Hintergriffselementen (42). Die elastischen Hintergriffselemente (42) sind - in Schnitt nach Figur 3 gesehen - z.B. sichelförmig nach außen gespreizt. Sie enden kurz unterhalb der Zylinderzone (21). Ihr maximaler Außendurchmesser ist z.B. 2 bis 3 mm größer als der Innendurchmesser der Bohrung (105). Die seitlichen Wandungen der Hintergriffselemente (42), also die an die Längsschlitze (43) angrenzenden Wandungen, liegen nur beispielhaft in Ebenen, in denen auch die Mittellinie (9) des Dübels liegt.

Ggf. können die Hintergriffselemente (42) z.B. auch an einem Ring angeordnet sein, der separat kraft- und/oder formschlüssig am Spreizkörper (10) sitzt.

Die Gewindebohrung (34) der Zylinderzone (21) setzt sich im Rohrabschnitt (31) fort. Der Rohrabschnitt (31) hat einen Außenradius, der kleiner ist als die Differenz aus dem Zylinderzonenradius und der Wandstärke des einzelnen Hintergriffselements (42).

Unterhalb der Hintergriffselemente (42) befindet sich der sich nach unten - also in Richtung Boden (119) - zumindest bereichsweise verjüngende Spreizabschnitt (50). Im Spreizabschnitt (50) befindet sich eine Bohrung (35), die im mittleren Dübelbereich zylindrisch und im unteren Dübelbereich kegelstumpfmantelförmig ausgeführt ist. Im kegelstumpfmantelförmigen Bereich (37) ist die Bohrung (35) zur Ausbildung von z.B. vier Klemmelementen (52) mit vier Längsschlitzen (53) versehen, vgl. auch Figur 2. Die Längsschlitze (53) haben im unverformten Zustand eine konstante, minimale Spaltbreite. Sie liegen hier z.B. jeweils in der Verlängerung der Längsschlitze (43). Ggf. sind die seitlichen Wandungen der Klemmelemente (52) zumindest bereichsweise ähnlich orientiert wie die seitlichen Wandungen der Hintergriffselemente (42).

Die Längsschlitze (53) haben wie die Längsschlitze (43) eine 90°-Teilung. Ggf. sind sie spiralförmig, zick-zack-, mäander- oder zinnenförmig gewunden. Zur Kerbentlastung können die Längsschlitze (53) auch in radial angeordneten Ausrundungen enden.

Das untere Ende der Bohrung (35) ist mit Hilfe von vier z.B. dünnwandigen Bodenstegen (57) verschlossen. Jeder Bodensteg (57) ist an das ihn tragende Klemmelement (52) angeformt. Zwischen den einzelnen Bodenstegen (57) liegt jeweils ein schmaler Bodenschlitz (58). Die Längsschlitze (53) und die Bodenschlitze (58) haben jeweils eine größte Spaltbreite, die z.B. 2 bis 40% kleiner ist als der Durchmesser der kleinsten Mikrokapsel (3, 4).

Unmittelbar oberhalb der Bodenstege (57) hat das untere Ende der Bohrung (35) nach Figur 3 einen Innendurchmesser, der größer ist als der halbe Innendurchmesser des zylindrischen Bereichs (36) der Bohrung (35).

Am unteren Ende des Spreizabschnitts (50) ist außen ein radial abstehender Steg (55) angeordnet. Der umlaufende Steg (55) wird jeweils durch die Längsschlitze (53) unterbrochen. Der Steg (55) hat z.B. eine radiale Höhe von ca. 0,3 bis 1 mm. Der maximale Durchmesser des Steges (55) ist bei radial unverformten Klemmelementen (52) kleiner als der Innendurchmesser der Bohrung (115), vgl. Figur 5.

Alternativ kann anstelle des Steges (55) auch ein ein- oder mehrgängiges Gewinde, eine umlaufende Querriffelung oder eine Noppenstruktur treten.

In Figur 3 ist im Dübel ein Keilkörper (60) dargestellt, vgl. auch Figuren 4 bis 8. Der Keilkörper (60) ist hier im Wesentlichen ein zylindrisches Bauteil, das bei einem nicht montierten Dübel im zylindrischen Bereich (36) der Bohrung (35) sitzt. An seiner zylindrischen Außenfläche können Rastnocken oder dergleichen angeordnet sein, die in entsprechende Rastaussparungen der Bohrung (35) eingreifen. Auf diese Weise kann der Keilkörper (60) in bestimmten Positionen dauerhaft verrastet werden.

Der Keilkörper (60) hat z.B. an seiner dem Sitzabschnitt (20) zugewandten Seite ein Keilkörperhemd (61). Mit diesem rohrförmigen Hemd (61) wird die Länge des Keilkörpers (60) so weit verlängert, dass der Keilkörper (60) - in seiner unteren Extremlage, vgl. Figuren 7 und 8 - die Längsschlitze (53) zumindest nach oben hin verschließt.

Ggf. ist der Keilkörper (60) von seiner unteren Stirnseite her bereichsweise ausgehöhlt, vgl. Figur 3, gestrichelte halbelliptische Linie.

In den Ausführungsbeispielen ist der Keilkörper (60) bezüglich seiner Außenkontur zumindest großteils ein rotationssymmetrischer Körper. Alternativ hierzu können seine einzelnen Querschnitte oder zumindest ein Teil davon auch quadratische, polygonale, ovale oder anders profilierte Querschnitte haben. Ggf. kann der Keilkörper (60) mit dem Spreizkörper (10) z.B. über ein Gewinde verbunden sein, so dass der Keilkörper (60) nicht in einer linearen, nichtrotierenden Rastbewegung, sondern über eine Einschraubbewegung montiert wird.

Der Spreizkörper (10) und der Keilkörper (60) sind aus einem Kunststoff, z.B. aus einem Polyamid, gefertigt.

Figur 5 zeigt den Spreizkörper (10) nach Ablauf einer ersten Einsetzbewegung in die Bohrung (130). Hierbei wird der Spreizkörper (10) z.B. so weit in die Bohrung (130) eingeschoben, dass er den Grund (119) der Bohrung (115) berührt oder gerade noch nicht kontaktiert. Auf diese Weise ist sichergestellt, dass die Hintergriffselemente (42), die beim Durchschieben durch die Bohrung (105) radial gegen den Rohrabschnitt (31) gepresst wurden, nach dem Passieren der unteren Oberfläche (103) der oberen Deckplatte (101) frei kommen und sich selbsttätig vom Rohrabschnitt (31) wieder abspreizen. In dem Hohlraum (49) vermischen sich jetzt die aus den geplatzten Mikrokapseln (3) und (4) ausgetretenen Klebstoffkomponenten unter Aufschäumen. Es entsteht - innerhalb weniger Minuten - ein Schaum (5), bei dem sich die in den Mikrokapseln eingelagerte Klebstoffkomponentenmenge - u.a. durch eine chemische Reaktion - auf das 4 bis 12-fache Volumen ausdehnt. Der Schaum (5) quellt u.a. über die Längsschlitze (43) in den Hohlraum (124) hinein.

Es ist auch denkbar, z.B. im oberen Bereich der Hintergriffselemente (42) einige radiale Bohrungen anzubringen, um auch dort Schaum (5) austreten zu lassen.

Nach dem Abspreizen der Hintergriffselemente (42) wird der Spreizkörper (10) mittels des Greifrohres (81) entgegen der Dübelsetzrichtung (8) bewegt, um die oberen Stirnflächen oder Kanten der Hintergriffselemente (42) an der unteren Oberfläche (103) der oberen Deckplatte (101) anzulegen. Zwischenzeitlich sind die oberen Stirnflächen mit klebrigem Schaum (5) benetzt, vgl. Figur 5. Beim Zurückziehen des Dübels stützt sich die Dübelsetzeinrichtung (80) über den Niederhalter (95) an der äußeren Oberfläche (102) ab, vgl. Figur 6. Die Stirnfläche (23) des Spreizkörpers (10) liegt nun knapp unterhalb der Oberfläche (102). Die Hintergriffselemente (42), der Rohrabschnitt (31), die Zylinderzone (21) und die obere Deckplatte (101) verkleben nun miteinander. Zumindest bereichsweise verklebt der obere Dübelbereich auch mit dem Stützkern (121). Konstruktionsbedingt kann der Schaum (5) nicht in die Gewindebohrung (34) eindringen.

In einem weiteren Verfahrensschritt werden die Klemmelemente (52) des Spreizkörpers (10) in der Sacklochbohrung (115) verklemmt, vgl. Figur 7. Dazu wird bei ortsfester Dübelsetzeinrichtung (80), d.h. der Niederhalter (95) und das Greifrohr (81) führen keine Relativbewegung zueinander aus, der Spreizstempel (90) gegen den Keilkörper (60) gefahren, um diesen in Dübelsetzrichtung (8) in der Ausnehmung (35) nach unten zu bewegen. Hierbei werden die im Hohlraum (59) gelagerten Mikrokapseln (3, 4) so komprimiert, dass sie zumindest großteils platzen. Sobald der Keilkörper (60) in den konischen Bereich (37) der sich nach unten hin verjüngenden Ausnehmung (35) kommt, beginnen sich die Klemmelemente (52) zumindest annähernd radial nach außen abzuspreizen. Die aus den Mikrokapseln (3, 4) freigesetzten Klebstoffkomponenten treten vermischt als Schaum (6) über die Längsschlitze (53, 59) seitlich und unten aus. Gleichzeitig krallen sich die einzelnen Abschnitte des Steges (55) in die Wandung der Sacklochbohrung (115). Der Klemmvorgang ist erst beendet, wenn der Keilkörper (60) fast das untere Ende des Spreizkörpers (10) erreicht hat, vgl. Figur 7. Die Bohrung (35) hat nun eine zumindest annähernd zylindrische Form. Die Längsschlitze (53) sind maximal gespreizt und zugleich durch den Keilkörper (60) - zumindest nach oben hin - vollständig verdeckt. Der Dübel sitzt fest in der Leichtbauplatte (100) und der Schaum (6) kann nicht in die Bohrung (35) und die Gewindebohrung (34) eindringen. Der Schaum (6) breitet sich zunehmend in den Hohlräumen (114, 124) aus. Er verklebt den Spreizabschnitt (50) mit der unteren Deckplatte (111) und zumindest mit dem unteren Bereich des Stützkerns (121).

Abschließend wird der Spreizstempel (90) zurückgezogen, das Greifrohr (81) aus der Gewindebohrung (34) herausgeschraubt und die Dübelsetzeinrichtung (80) von der Leichtbauplatte (100) weggeschwenkt.

In den Figuren 8 und 12 wird ein an der Leichtbauplatte (100) befestigter Beschlag (2) gezeigt. Letzterer ist mittels einer Senkkopfschraube (1) am Dübel bzw. am festsitzenden Spreizkörper (10) verschraubt. In dieser Darstellung ist auch erkennbar, dass die Schäume (5) und (6) ihre maximale Ausdehnung erreicht haben. Bei dieser Ausdehnung ist sichergestellt, dass beide Deckplatten (101, 111) nun auch stoffschlüssig über den ausgehärteten Klebstoff mit dem Dübel verbunden sind.

Der in Figur 12 dargestellte Dübel hat einen Spreizkörper (10), der vor der inneren Oberseite (113) der unteren Deckplatte (111) endet. Der Abstand zwischen der unteren Stirnseite des Spreizkörpers (10) und der Oberfläche (113) beträgt z.B. 0,1 bis 3 Millimeter.

Hier hat der Spreizkörper (10) eine zylindrische Bohrung (35), die vor einem Boden (56) endet. Die Bohrung (35) ist im Spreizabschnitt (50) über Längsschlitze (53) mit der Dübelumgebung verbunden. Die Längsschlitze (53) haben die aus den Figuren 1 und 2 bekannte Form, vgl. auch Figur 13. Der Boden (56), der z.B. auch konkav gekrümmt sein kann, hat ebenfalls Schlitze (58), die jedoch gegenüber den Längsschlitzen (53) versetzt angeordnet sind.

In unteren Bereich hat hier der Spreizabschnitt (50) z.B. mehrere umlaufende Ringnuten (51). Sie haben beispielsweise dreieckige oder anders geformte Einzelquerschnitte. Anstelle der Ringnuten kann der Spreizabschnitt (50) auch ein Außengewinde tragen.

Ggf. hat der Spreizkörper (10) in den Bereichen zwischen den Längsschlitzen (53) zusätzliche z.B. radial orientierte leitflächenartige Rippen (45), deren maximale radiale Ausdehnung den Durchmesser der Zylinderzone (21) erreichen kann. Die Oberfläche der Rippen (45) und/oder die Außenfläche des Bodens (56) kann - zur Verbesserung der Klebstoffanhaftung - fein oder auch grob strukturiert sein. Die Rippen (45) erstrecken sich z.B. bis zum Hintergriffsabschnitt (40).

Beim Zerdrücken der Mikrokapseln (3, 4) treten die Klebstoffkomponenten, einen klebrigen, sich z.B. expandierenden Schaum (6) bildend, durch die Längsschlitze (53, 58) in den den Dübel umgebenden Hohlraum (124) aus.

Alternativ kann auch bei diesem Dübel der Spreizanschnitt (50) die gleiche Ausgestaltung haben, wie in den Figuren 1 und 2 dargestellt. Der Spreizkörper (10) würde sich dann im Stützkern (121) aufspreizen und sich so zusätzlich verhaken. Der Klebstoff würde sich, wie zu Figur 12 beschrieben, im Hohlraum (124) ausbreiten.

Ferner ist es möglich, den Spreizkörper (10) so zu gestalten, dass die Bohrung (35) geschlossen bleibt oder vollständig wegfällt. In diesem Fall werden im Hohlraum (49) Mikrokapseln (3, 4) gelagert, deren expandierender Schaum (5) nach der Montage den Dübel mit beiden Deckplatten (101, 111) verklebt. Der Keilkörper (60) entfällt bei dieser Variante.

Selbstverständlich ist das Prinzip des Dübels nicht auf Dübel mit zumindest bereichsweise zylindrischer Außenkontur beschränkt. Der Dübel kann z.B. auch für eine Ausnehmung konstruiert werden, die einen - zumindest abschnittsweise - langlochförmigen oder ovalen Querschnitt hat.

### Bezugszeichenliste:

- 1: Befestigungsmittel, Schraube, Senkkopfschraube
- 2: Beschlag
- 3, 4: Ballons, Mikrokapseln, Mikroperlen
- 5, 6: Schäume, Klebstoffschäume, Klebstoffe Klebstoff- oder Klebstoffkomponentengemische
- 8: Dübelsetzrichtung
- 9: Mittellinie des Dübels

- 10: Spreizkörper

- 20: Sitzabschnitt
- 21: Zylinderzone

- 23: Stirnflächen, oben
- 24: Umlaufsteg
- 26: Widerhakenstege, Umlaufstege, Oberflächenstruktur
- 27: Stützflanke
- 28: Rutschflanke
- 29: Ringkanal, umlaufend

- 31: Rohrabschnitt
- 33: Nut
- 34: Gewindebohrung
- 35: Bohrung
- 36: zylindrischer Abschnitt von (35)
- 37: kegelstumpfmantelförmiger Abschnitt von (35)

- 40: Hintergriffsabschnitt
- 42: Hintergriffselemente
- 43: Längsschlitze, Öffnung
- 44: Seitenflächen von (42)

- 45: Längsrippen, Rippen
- 47: Folienbrücke
- 48: Hilfskreis, Hilfszylinder
- 49: Hohlraum

- 50: Spreizabschnitt
- 51: Ringnuten, Grobgewinde
- 52: Klemmelemente
- 53: Längsschlitze, Öffnung
- 54: Seitenflächen von (52)
- 55: Steg, umlaufend
- 56: Boden
- 57: Bodenstege
- 58: Bodenschlitze, Öffnung
- 59: Hohlraum von (50)

- 60: Keilkörper
- 61: Keilkörperhemd
- 62: Keilkörperausnehmung, unten

- 80: Dübelsetzeinrichtung
- 81: Greifrohr
- 82: Durchgangsbohrung
- 83: Gewindeabschnitt
- 84: Wellenbund
- 90: Spreizstempel
- 95: Niederhalter

- 100: Sandwichplatte, Leichtkern-Verbundplatte; flächiges Bauteil in Stützkernbauweise
- 101: Deckplatte, oben
- 102: außenliegende Oberfläche

- 103: innenliegende Oberfläche
- 105: Bohrung

- 111: Deckplatte, unten
- 113: innenliegende Oberfläche
- 114: Hohlraum in (111)
- 115: Sacklochbohrung, Sacklochausnehmung
- 119: Boden von (115)

- 121: Stützkern, Wabenkern, Schaumstoffkern
- 124: Hohlraum in (121)
- 125: Bohrung

- 130: Gesamtbohrung, Ausnehmung

## Patentansprüche

1. Dübel zur Befestigung an - in Stützkernbauweise gefertigten
- flächigen Bauteilen (100) mit einer ersten (101) und einer zweiten Deckplatte (111) und mindestens einer Stützkernzwischenlage (121) in einer Ausnehmung (130), die die erste Deckplatte (101) und die Stützkernzwischenlage (121) durchdringt und die als Sacklochausnehmung (115) in die zweite Deckplatte (111) bereichsweise hineinragt,
- wobei der Dübel mindestens einen - zur Aufnahme zumindest eines Befestigungsmittels ausgebildeten - Spreizkörper (10) und mindestens einen im Spreizkörper geführten Keilkörper (60) umfasst,
- wobei der Dübel in die Ausnehmung (130) setzbar ist,
- wobei der Dübel mindestens ein dübelseitiges Hintergriffselement (42) aufweist, mit dem die erste Deckplatte (101) zumindest bereichsweise hintergreifbar ist,
- wobei der Dübel mindestens zwei dübelseitige Klemmelemente (52) hat, die radial in der Sacklochausnehmung (115) verklemmbar sind,
- wobei der Dübel mindestens einen Hohlraum (49, 59) - zur Aufnahme einer größeren Anzahl von Klebstoff oder Klebstoffkomponenten aufnehmenden Ballons (3, 4) - mit mindestens einer Öffnung (43, 53) aufweist,
- wobei der oder die Hohlräume (49, 59) bei der Dübelmontage unter Eigenverformung und Zerdrücken der Ballons (3, 4) temporär veränderbar sind und
- wobei die maximale Weite der einzelnen Öffnung (43, 53) kleiner ist als der Durchmesser des kleinsten Ballons (3, 4).

2. Dübel zur Befestigung an - in Stützkernbauweise gefertigten
- flächigen Bauteilen (100) mit einer ersten (101) und einer zweiten Deckplatte (111) und mindestens einer Stützkernzwischenlage (121) in einer Ausnehmung (130), die die erste Deckplatte (101) und die Stützkernzwischenlage (121) durchdringt,
- wobei der Dübel mindestens einen - zumindest ein Befestigungsmittel aufnehmenden - Spreizkörper (10) und mindestens einen im Spreizkörper geführten Keilkörper (60) umfasst,
- wobei der Dübel in die Ausnehmung (130) setzbar ist,
- wobei der Dübel mindestens ein dübelseitiges Hintergriffselement (42) aufweist, mit dem die erste Deckplatte (101) zumindest bereichsweise hintergreifbar ist,
- wobei der Dübel mindestens einen Hohlraum (49, 59) - zur Aufnahme einer größeren Anzahl von Klebstoff oder Klebstoffkomponenten aufnehmenden Ballons (3, 4) - mit mindestens einer Öffnung (43, 53) aufweist,
- wobei der oder die Hohlräume (49, 59) bei der Dübelmontage unter Eigenverformung und Zerdrücken der Ballons (3, 4) temporär veränderbar sind und
- wobei die maximale Weite der einzelnen Öffnung (43, 53) kleiner ist als der Durchmesser des kleinsten Ballons (3, 4).

3. Dübel gemäß Anspruch 1 oder 2, **dadurch gekennzeichnet, dass** der Spreizkörper (10) mindestens einen oberen (49) und einen unteren Hohlraum (59) als Ballonreservoir aufweist.

4. Dübel gemäß Anspruch 1 oder 2, **dadurch gekennzeichnet, dass** in mindestens einem der Hohlräume (49, 59) mindestens zwei verschiedene Arten von Klebstoffkomponenten umhüllende Ballons (3, 4) vorhanden sind.

5. Dübel gemäß Anspruch 1 oder 2, **dadurch gekennzeichnet, dass** der obere Hohlraum (49) durch die Hintergriffselemente (42) und einen Sitzabschnitt (20) begrenzt wird.

6. Dübel gemäß Anspruch 1, **dadurch gekennzeichnet, dass** die im Spreizkörper (10) vorhandene Ausnehmung (35) zur Führung des Keilkörpers (60) einen zylindrischen (36) und einen kegelstumpfmantelförmigen Abschnitt (37) aufweist.

7. Dübel gemäß Anspruch 4 und 6, **dadurch gekennzeichnet, dass** der untere Hohlraum (59) die sich zumindest bereichsweise nach unten hin - zum freien Ende der Klemmelemente (52) hin - verjüngende Ausnehmung (35) ist, die rückwärtig durch den Keilkörper (60) verschlossen ist.

8. Dübel gemäß Anspruch 1, **dadurch gekennzeichnet, dass** der Spreizkörper (10) zur Ausbildung der Klemmelemente (52) im Spreizabschnitt (50) zumindest bereichsweise längageschlitzt ist.

9. Dübel gemäß Anspruch 1 oder 2, **dadurch gekennzeichnet, dass** der Keilkörper (60) eine Länge hat, die größer ist als die Länge der zwischen den Klemmelementen (52) gelegenen Längsschlitze (53).

10. Dübel gemäß Anspruch 1 oder 2, **dadurch gekennzeichnet, dass** bei gesetztem Dübel die in der Bohrung (105) sitzende Zylinderzone (21) des Spreizkörpers (10) zur Verdrehsicherung des Dübels eine Oberflächenstruktur (26) aufweist.

11. Dübel gemäß Anspruch 2, **dadurch gekennzeichnet, dass** die Ausnehmung (35) zylindrisch ist, im unteren Bereich des Spreizkörpers (10) einen Boden (56) aufweist, der schmale Schlitze (58) oder kleine Bohrungen aufweist und einen längsverschieblichen - das Volumen des Hohlraums (59) bei der Montage verändernden - Keilkörper (60) lagert.

12. Dübel gemäß Anspruch 2, **dadurch gekennzeichnet, dass** der untere Abschnitt (50) mehrere radiale Längsschlitze (53) aufweist.

13. Verfahren zur Montage eines Dübels - gemäß Anspruch 1 - in ein - in Stützkernbauweise gefertigtes - flächiges Bauteil (100) mit einer ersten (101) und einer zweiten Deckplatte (111) und mindestens einer Stützkernzwischenlage (121), wobei der Dübel mindestens einen - zumindest ein Befestigungsmittel aufnehmenden - Spreizkörper (10) und mindestens einen im Spreizkörper (10) geführten Keilkörper (60) umfasst, **dadurch gekennzeichnet,**
- **dass** der Keilkörper (60) im Spreizkörper (10) in einer sich nach unten hin verjüngenden Bohrung (35) geführt wird,
- **dass** der Spreizkörper (10) im ungespreizten Zustand mit Hilfe einer Dübelsetzeinrichtung (80) in eine Ausnehmung (130) des Bauteils (100) eingesetzt wird, die die erste Deckplatte (101) und die Stützkernzwischenlage (121) durchdringt und als Sacklochausnehmung (115) in die zweite Deckplatte (111) bereichsweise hineinragt,
- **dass** sich die am Spreizkörper (10) angeordneten mindestens zwei Hintergriffselemente (42) nach dem Einsetzen in die Ausnehmung (130) im Bereich der Stützkernzwischenlage (121) selbsttätig spreizen,
- **dass** bei dem durch die Dübelsetzeinrichtung (80) fixierten Spreizkörper (10) der Keilkörper (60) zum Festklemmen der am Spreizkörper (10) angeformten Klemmelemente (52) in der Sacklochbohrung (115) in Dübelsetzrichtung (8) - unter einem Klebstoff- oder Klebstoffkomponenten freisetzenden Ballonzerdrücken verschoben wird, wobei die freigesetzten Klebstoff- oder Klebstoffkomponentengemische (5, 6) mindestens eine Deckplatte (101, 111) über die Öffnungen (43, 53) oder über Kanäle erreichen und klebend benetzen.

14. Verfahren zur Montage eines Dübels gemäß Anspruch 13, **dadurch gekennzeichnet, dass** der Spreizkörper (10) nach dem Spreizen der Hintergriffselemente (42), entgegen der Dübelsetzrichtung (8), von unten her gegen die rückseitige Oberfläche der ersten Deckplatte (101) gezogen wird.

15. Verfahren zur Montage eines Dübels gemäß Anspruch 13, **dadurch gekennzeichnet, dass** die Hintergriffselemente (42) einen mit Ballons (3, 4) befüllten oberen Hohlraum (49) bilden, in dem die Ballons (3, 4) durch das sich beim Dübelsetzen zwangsläufig ergebende Verschwenken der Hintergriffselemente (42) Klebstoff- und/oder Klebstoffkomponenten (5, 6) freisetzend zerdrückt werden.

## Claims

1. An anchor (plug) for fastening to planar building components (100) made in a supporting-core-type construction and having a first (101) and a second cover plate (111) and at least one supporting-core intermediate layer (121), in an opening (130) extending through said first cover plate (101) and supporting-core intermediate layer (121) and then section-wise into second cover plate (111) in the form of a blind bore (115),
- said plug comprising at least one spreader body (10) for receiving at least one fastening means and at least one wedge body (60) guided within said spreader body;
- said plug adapted to be set into opening (130);
- said plug comprising at least one plug-side rear-gripping element (42) adapted to engage at least section-wise behind first cover plate (101);
- said plug including at least a pair of plug-side clamping elements (52) adapted to be clamped radially in blind bore (115);
- said plug comprising at least one cavity (49, 59) having at least one opening (43, 53), said cavity adapted to receive a major number of balloons (3, 4) holding an adhesive material or components thereof; and
- said cavity or cavities (49, 59) adapted to be modified temporarily as the plug is being set while the balloons or capsules (3, 4) are deformed and crushed;
- with the maximum width of each individual opening (43, 53) being smaller than the diameter of the smallest balloon (3, 4).

2. An anchor (plug) for fastening to planar building components (100) made in a supporting-core-type construction and having a first (101) and a second cover plate (111) and at least one supporting-core intermediate layer (121), in an opening (130) extending through said first cover plate (101) and supporting-core intermediate layer (121);
- said plug comprising at least one spreader body (10) receiving at least one fastening means and at least one wedge body (60) guided within said spreader body;
- said plug adapted to be set into opening (130);
- said plug comprising at least one plug-side rear-gripping element (42) adapted to engage at least section-wise behind first cover plate (101);
- said plug comprising at least one cavity (49, 59) having at least one opening (43, 53), said cavity adapted to receive a major number of balloons or capsules (3, 4) holding an adhesive material or components thereof;
- said cavity or cavities (49, 59) adapted to be modified temporarily as the plug is being set and balloons or capsules (3, 4) are deformed and crushed; and
- with the maximum width of each individual opening (43, 53) being smaller than the diameter of the smallest balloon (3, 4).

3. Plug as claimed in claim 1 or 2, **characterized in that** spreader body (10) has at least one upper (49) and one lower cavity (59) to act as balloon reservoirs.

4. A plug as claimed in claim 1 or 2, **characterized by** at least one of cavities (49, 59) holding balloons/capsules (3, 4) containing at least two different kinds of adhesive components.

5. Plug as claimed in claim 1 or 2, **characterized in that** upper cavity (49) is delimited by rear-gripping elements (42) and a seat section (20).

6. Plug as claimed in claim 1, **characterized in that**, for guiding wedge body (60), opening (35) in spreader body (10) has cylindrical portion (36) and a frustroconical portion (37).

7. Plug as claimed in claims 4 and 6, **characterized in that** said lower cavity (59) comprises said opening (35) which tapers downwardly to the free end of wedging elements (52) and is sealed rearwardly by wedge body (60).

8. Plug as claimed in claim 1, **characterized in that**, for forming clamping elements (52), spreader body (10) is formed to have longitudinal slits therein at least section-wise.

9. Plug as claimed in claim 1 or 2, **characterized in that** wedge body (60) has a length greater than that of the longitudinal slits (53) between clamping elements (52).

10. Plug as claimed in claim 1 or 2, **characterized in that**, with the plug in place, the cylindrical zone (21) of spreader body (10) inside bore (105) has a surface structure (26) designed to secure the plug against rotation.

11. Plug as claimed in claim 2, **characterized in that** opening (35) is cylindrical, **in that** it has in the lower portion of spreader body (10) a bottom (56) having narrow slits (58) or small bores therethrough, and that it is adapted to receive and support a longitudinally movable wedge body (60) adapted to change the volume of cavity (59) as the plug is being set.

12. Plug as claimed in claim 2, **characterized in that** lower portion (50) has a plurality of longitudinal slits (53) extending radially therethrough.

13. A method of setting an anchor (plug) as claimed in claim 1 in planar building components (100) made in a supporting-core-type construction and having a first (101) and a second cover plates (111) and at least one supporting-core intermediate layer (121), said plug comprising at least one spreader body (10) adapted to receive a fastening means and at least one wedge body (60) guided inside spreader body (10), **characterized in that**
- wedge body (60) is guided in spreader body (10) inside a downwardly tapering bore (35);
- in its non-expanded position, spreader body (10) is introduced with the aid of a plug setting device (80) into an opening (130) of structural component (100) which extends through first cover plate (101) and supporting-core intermediate layer (121) and then section-wise into second cover plate (111) in the form of a blind bore (115);
- following said placement and insertion into opening (130), the at least two rear-gripping elements (42) on spreader body (10) expand or spread apart automatically in the area of supporting-core intermediate layer (121); and,
- with spreader body (10) retained in place by plug setting device (80), wedge body (60) is shifted in the plug setting direction (8) so as to lock clamping elements (52) formed on spreader body (10) in blind bore (115) and said balloons/capsules are crushed and the adhesive or the components thereof released, with the adhesive or adhesive component mixctures (5, 6) so released reaching and adhesively wetting at least one cover plate (101, 111) through openings (43, 53) or passages.

14. Method for setting a plug as claimed in claim 13, **characterized in that**, following the expansion or spreading apart of rear-gripping elements (42), spreader body (10) is pulled against plug setting direction (8) from below against the rear surface of first cover plate (101).

15. Method of setting a plug as claimed in claim 13, **characterized in that** rear-gripping elements (42) form an upper cavity (49) filled with balloons (3, 4) in which said balloons (3, 4) are crushed by the pivoting movement of rear-gripping elements (42) as forced by the setting of the plug, with adhesive or the components (5, 6) thereof released in the process.

## Revendications

1. Cheville destinée à être fixée dans des éléments plans de construction sandwich (100), composés d'une première plaque de recouvrement (101) et d'une deuxième plaque de recouvrement (111) et au moins d'une couche intermédiaire de renforcement (121) dans un orifice (130) qui traverse la première plaque de recouvrement (101) et la couche intermédiaire (121) et qui entre, en partie, comme un trou borgne (115) dans la deuxième plaque de recouvrement (111),
- la cheville comprenant au moins un corps expansible (10), destiné à recevoir pour le moins un matériel de fixation, et au moins un coin (60) logé dans le corps expansible,
- la cheville pouvant être posée dans l'orifice (130),
- la cheville présentant au moins un élément de prise arrière (42) qui peut s'accrocher, au moins par endroits, derrière la première plaque de recouvrement (101),
- la cheville ayant au moins deux éléments de serrage (52) qui peuvent être bloqués radialement dans le trou borgne (115),
- la cheville présentant au moins une cavité (49, 59) avec au moins une ouverture (43, 53) pour loger un nombre plus ou moins grand de ballons (3, 4) destinés à recevoir de l'adhésif ou des composants adhésifs,
- la ou les cavités (49, 59) étant temporairement modifiables lors du montage de la cheville par l'autodéformation et l'écrasement des ballons (3, 4) et
- la largeur maximale de chaque ouverture (43, 53) étant inférieure au diamètre du plus petit ballon (3, 4).

2. Cheville destinée à être fixée dans des éléments plans de construction sandwich (100), composés d'une première plaque de recouvrement (101) et d'une deuxième plaque de recouvrement (111) et au moins d'une couche intermédiaire de renforcement (121) dans un creux (130) qui traverse la première plaque de recouvrement (101) et la couche intermédiaire (121),
- la cheville comprenant au moins un corps expansible (10) qui reçoit au moins un matériel de fixation, et au moins un coin (60) guidé dans le corps expansible (10),
- la cheville pouvant être posée dans l'orifice (130),
- la cheville présentant au moins un élément de prise arrière (42) qui peut s'accrocher, au moins par endroits, derrière la première plaque de recouvrement (101),
- la cheville présentant au moins une cavité (49, 59) avec au moins une ouverture (43, 53) pour loger un nombre plus ou moins grand de ballons (3, 4) destinés à recevoir de l'adhésif ou des composants adhésifs,
- la ou les cavités (49, 59) étant temporairement modifiables, lors du montage de la cheville, par l'autodéformation et l'écrasement des ballons (3, 4) et
- la largeur maximale de chaque ouverture (43, 53) étant inférieure au diamètre du plus petit ballon (3, 4).

3. Cheville selon les revendications 1 ou 2, **caractérisée en ce que** le corps expansible (10) présente au moins une cavité supérieure (49) et une cavité inférieure (59) servant de réservoir pour les ballons.

4. Cheville selon les revendications 1 ou 2, **caractérisée en ce que** des ballons (3, 4) qui contiennent au moins deux différentes sortes de composants adhésifs se trouvent au moins dans une des cavités (49, 59).

5. Cheville selon les revendication 1 ou 2, **caractérisée en ce que** la cavité supérieure (49) est limitée par les éléments de prise arrière (42) et une section d'appui (20).

6. Cheville selon la revendication 1, **caractérisée en ce que** le creux (35) dans le corps expansible (10) présente une section cylindrique (36) et une section tronconique (37) pour le guidage du coin (60).

7. Cheville selon les revendications 4 et 6, **caractérisée en ce que** la cavité inférieure (59) est constituée par le creux (35) qui diminue, tout au moins par endroits, vers le bas, vers l'extrémité libre des éléments de serrage (52) et qui est fermée à l'arrière par le coin (60)

8. Cheville selon la revendication 1, **caractérisée en ce que** le corps expansible (10) présente des fentes longitudinales, tout au moins dans une partie de la section expansible (50), pour la formation des éléments de serrage (52).

9. Cheville selon la revendication 1 ou 2, **caractérisée en ce que** le coin (60) a une longueur supérieure à la longueur des fentes longitudinales (53) se trouvant entre les éléments de serrage (52)

10. Cheville selon la revendication 1 ou 2, **caractérisée en ce que**, la cheville étant alors posée, la zone cylindrique (21) dans la forure (105) du corps expansible (10) présente une structure de surface (26) assurant une sécurité anti-rotation de la cheville.

11. Cheville selon la revendication 2, **caractérisée en ce que** le creux (35) est cylindrique, avec un fond (56) dans la partie inférieure du corps expansible (10) qui présente des fentes étroites (58) ou des petites forures et où est logé un coin (60) qui peut se déplacer dans le sens de la longueur et qui modifie le volume de la cavité (59) lors du montage.

12. Cheville selon la revendication 2, **caractérisée en ce que** la section inférieure (50) présente plusieurs fentes longitudinales (53) radiales.

13. Procédé pour le montage d'une cheville - selon la revendication 1 - dans un élément de construction plate (100)
- en construction sandwich - composé d'une première plaque de recouvrement (101) et d'une deuxième plaque de recouvrement (111) et au moins d'une couche intermédiaire de renforcement (121), la cheville étant composée au moins d'un corps expansible (10) qui contient au moins un moyen de fixation, et au moins d'un coin (60) guidé dans le corps expansible (10), **caractérisé en ce**
- **que** le coin (60) est guidé dans le corps expansible, dans une forure rétrécissant vers le bas (35)
- **que** le corps expansible (10) non écarté est placé, par l'intermédiaire d'un système de pose de cheville (80), dans un creux adapté (130) de l'élément de construction (100) qui traverse la première plaque de recouvrement (101) et la couche intermédiaire de renforcement (121) et qui entre en partie, comme un trou borgne (115), dans la deuxième plaque de recouvrement (111),
- **que** les éléments de prise arrière (42) dont le nombre s'élève au mois à deux et qui sont montés sur le corps expansible (10) s'écartent automatiquement à l'intérieur de la couche intermédiaire (121), après avoir été placés dans le creux (130),
- **que** le coin (60) du corps expansible (10), fixé par le système de pose de cheville (80) et destiné à bloquer les éléments de serrage (52) formés sur le corps expansible (10), est déplacé dans le trou borgne (115), dans la direction de pose de la cheville (80), tout en écrasant un ballon, ce qui libère de l'adhésif ou des composants adhésifs, ayant comme résultat que les mélanges d'adhésif ou de composants adhésifs (5, 6) libérés atteignent au moins une plaque de recouvrement (101, 111) en passant par les ouvertures (43, 53) ou par des canaux et qu'ils humidifient cette plaque devenant adhésive.

14. Procédé pour le montage d'une cheville selon la revendication 13, **caractérisé en ce que** le corps expansible (10), après l'écartement des éléments de prise arrière (42), est tiré par le bas, dans le sens opposé au sens de pose de la cheville (8), vers la surface arrière de la première plaque de recouvrement (101).

15. Procédé pour le montage d'une cheville selon la revendication 13, **caractérisé en ce que** les éléments de prise arrière (42) forment une cavité supérieure (49) remplie de ballons (3, 4) dans laquelle les ballons (3, 4) sont écrasés, tout en libérant de l'adhésif et/ou des composants adhésifs (5, 6), par le pivotement inévitable des éléments de prise arrière (42).
